# EUROPEAN PATENT APPLICATION

(11) **EP 1 959 239 A1**
(43) Date of publication of application: **20.08.2008**
(21) Application number: 08101642.0
(22) Date of filing: 14.02.2008
(51) Int. Cl.: G01C 23/00

(54) **Target zone display system and method**

(30) Priority: 16.02.2007 US 890303 P; 27.07.2007 US 829534
(71) Applicant: Honeywell International Inc., Morristown, NJ 07962 (US)
(72) Inventor: Feyereisen, Thea L., Hudson, WI 54016 (US); He, Gang, Morristown, NJ 07960 (US)
(74) Representative: Buckley, Guy Julian

(57) **Abstract**

A display system and method for a vehicle are provided. The system includes a processor configured to receive data representative of a target zone and topography and to supply display commands associated with the target zone and the topography. The system further includes a display device coupled the processor for receiving the display commands and operable to render three-dimensional topography at a first scale and a symbol representing the target zone on the three-dimensional topography at a second scale, which is larger than the first scale.

## Description

### CROSS-REFERENCE TO RELATED APPLICATION

This application claims the benefit of U.S. Provisional Application No. 60/890,303, filed February 16, 2007.

### TECHNICAL FIELD

The present invention generally relates to aircraft flight deck display systems and methods and, more particularly, to systems and methods for enhanced displays of target zones to flight crews.

### BACKGROUND

Pilots of aircraft must visually acquire a target zone that represents an intended destination, such as a landing area and/or a target for attack. The target zone can be represented on a display system within the aircraft. However, controlling an aircraft while trying to visually acquire the target zone, either outside of the aircraft or on the display system within the aircraft, can be a difficult task.

Accordingly, it is desirable to provide a system and method of displaying target zones in a manner that enhances the display of the target zones. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with one exemplary embodiment, a display system for a vehicle is provided. The system includes a processor configured to receive data representative of a target zone and topography and to supply display commands associated with the target zone and the topography. The system further includes a display device coupled the processor for receiving the display commands and operable to render three-dimensional topography at a first scale and a symbol representing the target zone on the three-dimensional topography at a second scale, which is larger than the first scale.

In accordance with another exemplary embodiment, a method is provided for displaying a target zone within a surrounding topography rendered in a first scale. The method includes determining a location of the target zone; and rendering, in a second scale larger than the first scale, a symbol representative of the target zone on the display such that the symbol is superimposed on the determined location of the target zone.

In accordance with yet another exemplary embodiment, a display system for a vehicle is provided. The system includes a processor configured to receive data representative of a target zone and topography and to supply display commands associated with the target zone and the topography. The system further includes a display device coupled the processor for receiving the display commands and operable to render three-dimensional topography in a first scale and a symbol representing the target zone on the three-dimensional topography in a second scale. The second scale is larger than the first scale at a first distance and equal to the first scale at a second, closer distance.

### BRIEF DESCRIPTION OF THE DRAWINGS

The present invention will hereinafter be described in conjunction with the following drawing figures, wherein like numerals denote like elements, and wherein:

FIG. 1 is a functional block diagram of a flight deck display system according to an exemplary embodiment;

FIG. 2 depicts an exemplary image that may be rendered by the flight deck display system of FIG. 1; and

FIG. 3 depicts another exemplary image that may be rendered by the flight deck display system of FIG. 1.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

The present invention may be described in terms of functional block diagrams and various processing steps. It should be appreciated that such functional blocks may be realized in many different forms of hardware, firmware, and/or software components configured to perform the various functions. For example, the present invention may employ various integrated circuit components, e.g., memory elements, digital signal processing elements, look-up tables, and the like, which may carry out a variety of functions under the control of one or more microprocessors or other control devices. Such general techniques are known to those skilled in the art and are not described in detail herein. Moreover, it should be understood that the exemplary process illustrated may include additional or fewer steps or may be performed in the context of a larger processing scheme. Furthermore, the various methods presented in the drawing Figures or the specification are not to be construed as limiting the order in which the individual processing steps may be performed. It should be appreciated that the particular implementations shown and described herein are illustrative of the invention and its best mode and are not intended to otherwise limit the scope of the invention in any way.

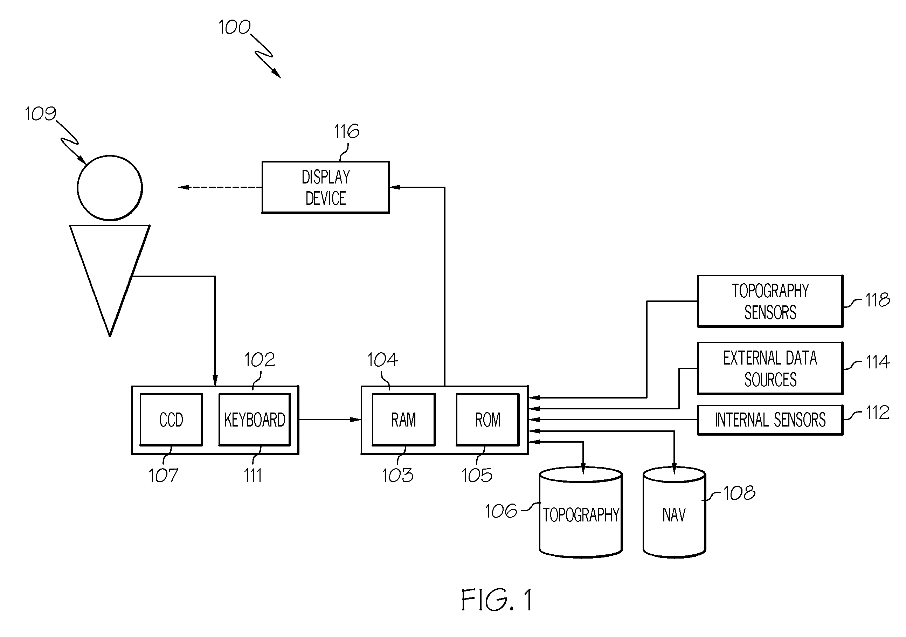

FIG. 1 is a functional block diagram of a flight deck display system 100 according to an exemplary embodiment. The display system 100 can be utilized in an aircraft, such as a helicopter, airplane, or unmanned vehicle. Moreover, exemplary embodiments of the display system 100 can also be utilized in spacecraft, ships, submarines, or other types of vehicles. For simplicity, embodiments are described below with reference to "aircraft." The display system 100 includes a user interface 102, a processor 104, one or more topography databases 106, one or more navigation databases 108, various inertial sensors 112 and topography sensors 118, various external data sources 114, and a display device 116.

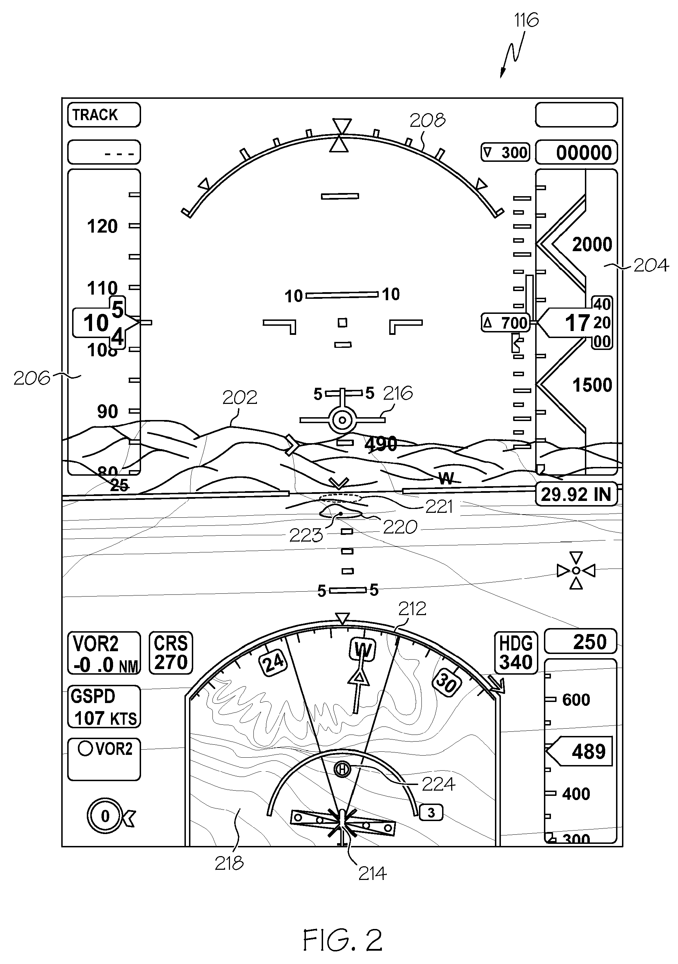

The user interface 102 is in operable communication with the processor 104 and is configured to receive input from a user 109 (e.g., a pilot or controller) and, in response to the user input, supply command signals to the processor 104. The user interface 102 may be any one, or combination, of various known user interface devices including, but not limited to, a cursor control device (CCD), such as a mouse, a trackball, or joystick, and/or a keyboard, one or more buttons, switches, or knobs. In the depicted exemplary embodiment, the user interface 102 includes a CCD 107 and a keyboard 111. The user 109 uses the CCD 107 to, among other things, move a cursor symbol on the display screen (see FIG. 2), and may use the keyboard 111 to, among other things, input textual data.

The processor 104 may be any one of numerous known general-purpose microprocessors or an application specific processor that operates in response to program instructions. In the depicted exemplary embodiment, the processor 104 includes on-board RAM (random access memory) 103, and on-board ROM (read only memory) 105. The program instructions that control the processor 104 may be stored in either or both of the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits may also be used.

The processor 104 is coupled to the topography databases 106, the navigation databases 108, and the display device 116. The processor 104 is also coupled to receive various types of inertial data from the inertial sensors 112, various avionics-related data from the external data sources 114, and various types of topography data from the topography sensors 118. The processor 104 is configured, in response to the inertial data and the avionics-related data, to selectively retrieve topography data from the topography databases 106 and navigation data from the navigation databases 108. As will be discussed below, the topography sensors 118 can also be used in place of or in conjunction with the topography databases 106 to provide topography data to the processor 104. Based on the topography and navigation data, the processor 104 then supplies display commands to the display device 116 for rendering an appropriate image. Particularly, the display device 116, in response to the display commands, selectively renders various types of textual, graphic, and/or iconic information. The preferred manner in which the textual, graphic, and/or iconic information are rendered by the display device 116 will be described in more detail further below. Before doing so, however, a brief description of the databases 106 and 108, the sensors 112 and 118, and the external data sources 114, at least in the depicted embodiment, will be provided.

The topography databases 106 include various types of data representative of the topography over which the aircraft is flying. Topography can include terrain, as well as man-made structures, airspace, and any other features relevant to the aircraft. The navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the topography databases 106 and the navigation databases 108 are, for clarity and convenience, shown as being stored separate from the processor 104, all or portions of either or both of these databases 106 and 108 could be loaded into the RAM 103, or integrally formed as part of the processor 104, and/or RAM 103, and/or ROM 105. The topography databases 106 and navigation databases 108 could also be part of a device or system that is physically separate from the display system 100. As an example, the navigation database 108 and topography databases 106 could be accessed remotely from the aircraft.

The inertial sensors 112 may be implemented using various types of inertial sensors, systems, and or subsystems for supplying inertial data. The inertial data may vary, but preferably include data representative of the state of the aircraft such as, for example, aircraft speed, heading, altitude, and attitude.

The topography sensors 118 can include visible, low-light TV, infrared, lidar, or radar-type sensors that can collect and provide real-time topography data to the processor 104.

The number and type of external data sources 114 may also vary. For example, the external systems (or subsystems) may include, for example, a terrain avoidance and warning system (TAWS), a traffic and collision avoidance system (TCAS), a runway awareness and advisory system (RAAS), a flight director, a navigation computer, an instrument landing system (ILS) receiver, and a global position system (GPS) receiver, just to name a few. For brevity of description and illustration, none of these data sources is depicted in FIG. 1, and will not be further described.

As noted above, the display device 116 in response to display commands supplied from the processor 104, selectively renders various textual, graphic, and/or iconic information and images to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known technologies. It is additionally noted that the display device 116 may be configured as any one of numerous types of aircraft flight deck displays. For example, it may be configured as a multi-function display, a horizontal situation indicator, or a vertical situation indicator. In the depicted embodiment, however, the display device 116 is configured as a primary flight display (PFD).

FIG. 2 depicts exemplary textual, graphical, and/or iconic information rendered by the display device 116 in response to appropriate display commands from the processor 104. The display device 116 renders a view of topography 202 ahead of the aircraft, preferably as a three-dimensional perspective view, an altitude indicator 204, an airspeed indicator 206, an attitude indicator 208, a heading indicator 212, a vehicle symbol 214, a flight path vector indicator 216, and a horizontal situation view 218. In addition, and as will now be described in more detail, the display device 116 may also selectively render information representative of one or more target zones 223. A target zone 223 may be any intended destination or other type of geo-referenced symbol associated with the aircraft, such as a landing point or a military target.

The information representative of one or more target zones 223 includes a symbol 220 on the view of the topography 202 that is superimposed on the location of target zone 223. The location of the target zone 223 and resulting placement of the symbol 220 can be identified from a flight plan, user selected from a database 106 and 108, provided by a user via one or more of the user interfaces 102 (e.g., keyboard, CCD, voice control, mind responsive device), or provided or selected from the external data sources 114. The processor 104 (FIG. 1) provides data commands associated with the location and placement of the symbol 220 to the display device 116 (FIG. 1), which then renders the symbol 220 within the topography 202.

The symbol 220 is sized to visually indicate the determined location of the target zone 223. In one embodiment, the symbol 220 is rendered on a larger scale than the surrounding topography 202 and the actual target zone 223, which makes the symbol 220 appear larger than it would otherwise. The symbol may be rendered with a size that is, for example, 5 or 10 times larger than the target zone 223 relative to the surrounding topography 202. This enables an increased awareness of the target zone 223. The shape of the symbol 220 can trace or follow the edges of the topography 202. By tracing the topography 202, the symbol 220 is not obscured by the three-dimensional nature of the topography 202. In an alternate embodiment, a symbol 221 corresponding to symbol 220 can be entirely or partially elevated from the topography to additionally improve visibility. Symbol 221 can be shaped to correspond to symbol 220, i.e., trace the topography, or symbol 221 can be a regular shaped, i.e., circular. Although FIG. 2 illustrates the symbol 220 as a circle, the symbol 220 can be rendered in any one of numerous shapes. A second symbol 224 indicates the location of the target zone on the horizontal situation view 218. The second symbol 224 can be rendered on the same scale as the topography, i.e., the same size as the target zone, or the second symbol 224 can also be rendered on a larger scale than the target zone.

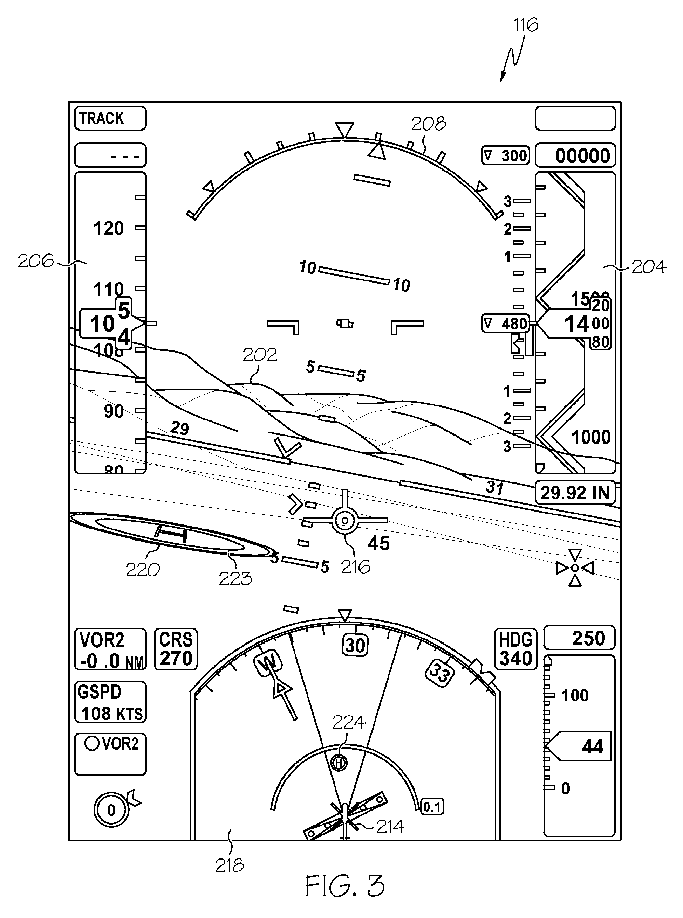

As shown in FIG. 3, while the symbol 220 is rendered with a larger than actual size to increase saliency, the processor 104 is preferably configured to, at some point, cause the scale, and associated size, of the symbol 220 to begin collapsing to the actual dimensions of the target zone 223. The point at which this occurs may vary and may be, for example, a predetermined distance to the target zone 223, a predetermined time to the target zone 223, etc. Moreover, the size of symbol 220 can vary based on use conditions of the aircraft. For example, in instrument conditions, the symbol 220 can be depicted smaller, more precise, and can be determined by the sensitivity of a sensor to ensure precise identification of the target zone 223.

In addition to the above, the symbol 220 may also be rendered with indicia to indicate the relative importance of the target zone 223. For example, the symbol 220 may be rendered in a color that indicates its relative importance, or instead or additionally with other textual, graphical, or iconic data representative of relative importance. For example, if the target zone is classified as a relatively high importance zone, then the symbol 220 may be rendered using a red color.

As FIG. 3 additionally depicts, as the aircraft approaches the actual location of the target zone 223, the processor may cause the display to no longer render various features surrounding the target zone. For example, in the embodiment depicted in FIG. 3, the horizontal situation display region 218 no longer includes detail associated with the topography or other features surrounding the target zone, which is represented by the second symbol 224. This enables an increased awareness of the location of the aircraft relative to the target zone.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A display system (100) for a vehicle, comprising:
a processor (104) configured to receive data representative of a target zone and topography (202) and to supply display commands associated with the target zone and the topography (202); and
a display device (116) coupled the processor (104) for receiving the display commands and operable to render three-dimensional topography (202) at a first scale and a symbol (220) representing the target zone (223) on the three-dimensional topography (202) at a second scale, the second scale being larger than the first scale.

2. The display system (100) of claim 1, wherein the second scale is 10 times larger than the first scale.

3. The display system (100) of claim 1, wherein the second scale is variable as a function of use conditions.

4. The display system (100) of claim 1, wherein the symbol (220) is located on, and conforms to, the three-dimensional topography (202).

5. The display system (100) of claim 1, wherein the symbol (220) is a first symbol (220), and wherein the display device (116) further renders a second symbol (224) at least partially elevated from the first symbol (220).

6. The display system (100) of claim 5, wherein the second symbol (224) has a regular shape.

7. The display system (100) of claim 1, wherein the second scale is variable based on vehicle distance from the target zone (223).

8. The display system (100) of claim 7, wherein the second scale matches the first scale at a predetermined distance.

9. The display system (100) of claim 1, wherein the symbol (220) is a first symbol (220) rendered in a first view on the three-dimensional topography (202), and wherein the display device (116) further renders a second view (218) configured to display two-dimensional, horizontal topography and a second symbol (224) indicating the target zone (223).

10. The display system (100) of claim 9, wherein the display device (116) removes the two-dimensional, horizontal topography from the second view (218) when the vehicle reaches a predetermined distance from the target zone (223).
